# EUROPÄISCHE PATENTANMELDUNG

(11) **EP 2 072 874 A1**
(43) Veröffentlichungstag der Anmeldung: **24.06.2009**
(21) Anmeldenummer: 08105898.4
(22) Anmeldetag: 01.12.2008
(51) Int. Cl.: F16L 3/10, F16L 3/11, F16L 55/035

(54) **Rohrschelle**

(30) Priorität: 21.12.2007 DE 102007055906
(71) Anmelder: HILTI Aktiengesellschaft, 9494 Schaan (LI)
(72) Erfinder: Birnbaum, Ulrich, 86929, Epfenhausen (DE); Mundwiler, Lukas, 4434, Hoelstein (CH)

(57) **Zusammenfassung**

Eine Rohrschelle weist einen Schellenbügel (12), der in einer Breite zueinander beabstandete Seitenränder (16) aufweist, und eine Einlage (21) auf, die einen Aufnahmeraum (22) mit einer lichten Weite für den Schellenbügel (12) aufweist. Der Aufnahmeraum (22) ist von einer dem Schellenbügel (12) zugewandten Rückseite (23) und von zwei beabstandet dazu angeordneten Hintergreifabschnitten (24) zum seitlichen Umgreifen der Seitenränder (16) des Schellenbügels (12) begrenzt. Die Einlage (21) ist quer zu einer Erstreckungsrichtung des Schellenbügels (12) vorgespannt an dem Schellenbügel (12) gehalten.

## Beschreibung

Die Erfindung betrifft eine Rohrschelle mit zumindest einem Schellenbügel, der in einer Breite zueinander beabstandete Seitenränder aufweist, und mit einer Einlage, die einen Aufnahmeraum mit einer lichten Weite für den Schellenbügel aufweist, wobei der Aufnahmeraum von einer dem Schellenbügel zugewandten Rückseite und von zwei beabstandet dazu angeordneten Hintergreifabschnitten zum seitlichen Umgreifen der Seitenränder des Schellenbügels zumindest bereichsweise begrenzt ist.

Eine derartige Rohrschelle dient der Fixierung und Halterung von Leitungen, wie z. B. von Rohren, Kabeln oder dergleichen, an einem Konstruktionselement, wie eine Decke oder eine Wand, oder an einem Träger mittels eines Befestigungselementes, wie beispielsweise einer Gewindestange. Zur Isolierung der fixierten Leitung, wie z. B. zur Körperschallentkopplung von Rohrleitungen gegenüber Gebäudeteilen, werden Einlagen aus einem elastischen Material innenseitig an dem Schellenbügel vorgesehen, welche zur Fixierung der Einlage an dem Schellenbügel diesen randseitig umgreifen. Eine derartige Rohrschelle ist beispielsweise aus der EP 0 413 883 A1 bekannt.

Nachteilig an der bekannten Lösung ist, dass die Einlage nur über geringe Haltekräfte an dem Schellenbügel gehalten ist. Während des Transports der Rohrschelle oder während der Montage der zu fixierenden Leitung können sich einzelne Teilabschnitte der Einlage von dem Schellenbügel lösen, was den Montageaufwand massgeblich erhöht.

Werden die Halteabschnitte für eine minimale Verbesserung der Haltekräfte massiver ausgebildet, sind die Fertigungskosten für die Einlage und somit der gesamten Rohrschelle höher, ohne dass dieses Material zur Isolierung der fixierten Leitung beiträgt. Umgibt z. B. eine schlauchförmige Einlage den Schellenbügel vollständig, ist diese zwar sicher an dem Schellenbügel gehalten, jedoch weist eine derartige Einlage einen hohen Materialverbrauch auf. Insbesondere bei grossen Rohrschellen, wie sie beispielsweise bei Lüftungsinstallationen Anwendung finden, führt eine Reduktion des Materialverbrauchs zu wesentlich geringeren Fertigungskosten.

Aufgabe der Erfindung ist es, eine Rohrschelle mit einer an einem Schellenbügel festlegbaren Einlage zu schaffen, die den Schellenbügel nur randseitig und mit für den Transport und die Montage der Leitung ausreichend hohen Haltekräften umgreift.

Die Aufgabe ist durch die Merkmale der unabhängigen Ansprüche gelöst. Vorteilhafte Weiterbildungen sind in den Unteransprüchen dargelegt.

Gemäss der Erfindung ist die Einlage quer zu einer Erstreckungsrichtung des zumindest einen Schellenbügels vorgespannt an dem zumindest einen Schellenbügel gehalten.

Mit der Vorspannung quer zu dem zumindest einen Schellenbügel ist die Einlage ausreichend fest an dem Schellenbügel gehalten, so dass der Montageaufwand massgeblich gegenüber den bisher bekannten Lösungen reduziert ist. Für eine ausreichende Haltekraft am Schellenbügel muss die Einlage nicht mehr massiver als herkömmliche Einlagen ausgebildet werden. Die Einlage der erfindungsgemässen Rohrschelle kann sogar einen geringeren Materialbedarf als herkömmliche Einlagen aufweisen, wobei eine sichere Fixierung am Schellenbügel weiterhin gewährleistet ist. Zwischen den freien Enden der einander zugewandten Hintergreifabschnitte ist eine sich entlang der Längserstreckung der Einlage verlaufende Montageöffnung gebildet, die eine einfache Montage der Einlage an dem zumindest einen Schellenbügel ermöglicht. Der zumindest eine Schellenbügel wird nur randseitig umgriffen und kommt in dem von der Rückseite und den Hintergreifabschnitten gebildeten Aufnahmeraum zu liegen, so dass nach aussen abragende Flansche oder aussenseitig angeordnete Anschlusselemente der Rohrschelle die innenseitige Montage der Einlage an dem zumindest einen Schellenbügel nicht behindern. Die Montage der Einlage an dem zumindest einen Schellenbügel ist zudem erleichtert, da die Hintergreifabschnitte bereits bei der Anordnung an dem Schellenbügel die Tendenz haben, sich um die Seitenränder des Schellenbügels zu legen.

Vorzugsweise weist die Einlage im unmontierten Zustand eine lichte Weite des Aufnahmeraums, die kleiner als die Breite des zumindest einen Schellenbügels ist, und eine abgewickelte Länge der Rückseite auf, die gleich oder kleiner der Breite des Schellenbügels ist. Bei einer abgewickelten Länge der Rückseite, die kleiner als die Breite des Schellenbügels ist, wird diese vorteilhaft nur ein klein wenig kleiner gewählt, so dass eine einfache Montage der Einlage am Schellenbügel weiterhin gewährleistet ist. Vorteilhaft beträgt die abgewickelte Länge der Rückseite das 0.8- bis 1.0-fache, besonders vorteilhaft 0.9- bis 1.0-fache, der Breite des Schellenbügels. Beim Montieren der Einlage an dem zumindest einen Schellenbügel wird die Einlage gestreckt. Diese Streckung erzeugt eine auf die Seitenränder wirkende Klemmkraft sowie ein Moment, die jeweils dafür sorgen, dass sich die Einlage an dem Schellenbügel festklemmt. Weiter wirken die Klemmkraft und das Moment einer Abstreifbewegung der Hintergreifabschnitte entgegen, was eine sichere und einfache Fixierung der Einlage an dem zumindest einen Schellenbügel gewährleistet.

Bevorzugt ist die Rückseite im unmontierten Zustand der Einlage konkav zu den Hintergreifabschnitten, was vorteilhafte Haltekräfte und eine einfache Fertigung der Einlage gewährleistet.

Vorzugsweise weist die Rückseite der Einlage dem Aufnahmeraum zugewandte Abschrägungen auf, die benachbart zu einem Übergangsbereich zwischen der Rückseite und den Hintergreifabschnitten vorgesehen sind. Dies gewährleistet vorteilhafte Haltekräfte und eine einfache Fertigung der Einlage. Vorteilhaft sind die Abschrägungen durch Materialanhäufungen gebildet, so dass die an dem zumindest einen Schellenbügel angeordnete Einlage auch in den Bereichen der Seitenränder des zumindest einen Schellenbügels vorteilhafte Entkopplungseigenschaften aufweist.

Vorteilhaft dient die an dem Schellenbügel angeordnete Einlage der Körperschallentkopplung einer in der Rohrschelle fixierten Leitung.

Vorteilhaft sind entlang der Längserstreckung der Einlage beziehungsweise des zumindest einen Schellenbügels Hohlräume im Querschnitt der Einlage angeordnet, welche die Weichheit der Einlage und somit die Entkopplung der mit der Rohrschelle fixierten Leitung verbessern. Weiter lassen sich mit weicheren Einlagen Toleranzen von Leitungsdurchmessern einfach ausgleichen. Des Weiteren sind an Schellenbügeln angeordneten Einlagen mit Hohlräumen voluminöser und unterstreichen auch optisch die vorteilhaften Isolations- beziehungsweise Entkopplungseigenschaften.

Die Einlage ist vorteilhaft aus einem elastischen Material und besonders vorteilhaft in einem Extrusionsverfahren gefertigt.

Die Erfindung wird nachstehend anhand eines Ausführungsbeispiels näher erläutert. Es zeigen:
Fig. 1 Eine erfindungsgemässe Rohrschelle in Seitenansicht;
Fig. 2 eine Schnittdarstellung durch einen Schellenbügel entlang der Linie II-II in Fig. 1;
Fig. 3 die in Fig. 2 dargestellte Einlage im unmontierten Zustand; und
Fig. 4 der in Fig. 2 dargestellte Schellenbügel ohne montierte Einlage.

Grundsätzlich sind in den Figuren gleiche Teile mit den gleichen Bezugszeichen versehen.

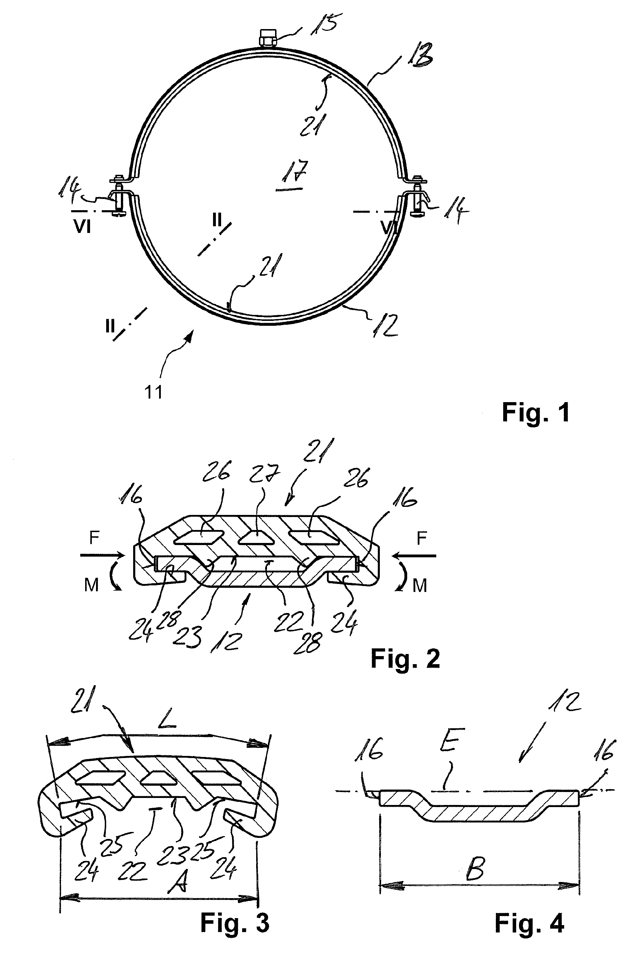

Die in den Figuren 1 bis 4 dargestellte Rohrschelle 11 weist zwei gebogene Schellenbügel 12 und 13 auf, die krümmungsseitig innen liegend eine Aufnahme 17 für eine zu fixierende Leitung (hier nicht dargestellt) ausbilden und die an nach aussen abragenden Flanschen über Spannschrauben 14 miteinander verbindbar sind. An einem Schellenbügel 13 ist krümmungsseitig aussen ein Anschlusskopf 15 vorgesehen zur Befestigung der Rohrschelle 11 an einem Konstruktionselement. Jeder Schellenbügel 12 und 13 weist in einer Breite B zueinander beabstandete Seitenränder 16 auf.

Weiter ist an beiden Schellenbügeln 12 und 13 der Rohrschelle 11 krümmungsseitig innen jeweils eine Einlage 21 vorgesehen, welche die mit der Rohrschelle 11 zu fixierende Leitung von den Schellenbügeln 12 und 13 entkoppeln. Die Einlage 21 weist jeweils einen Aufnahmeraum 22 mit einer lichten Weite A für den Schellenbügel 12 (in Fig. 2) auf, wobei der Aufnahmeraum 22 bereichsweise von einer dem Schellenbügel 12 zugewandten Rückseite 23 und von zwei beabstandet dazu angeordneten Hintergreifabschnitten 24 zum seitlichen Umgreifen der Seitenränder 16 des Schellenbügels 12 begrenzt ist. Die Einlage 21 ist quer zu einer Erstreckungsrichtung des Schellenbügels 12 vorgespannt an dem Schellenbügel 12 gehalten. Die am Schellenbügel 13 angeordnete Einlage 21 ist analog der am Schellenbügel 12 angeordneten Einlage 21 ausgebildet.

Die Einlage weist im unmontierten Zustand (siehe Fig. 3) eine lichte Weite A des Aufnahmeraums 22, die kleiner als die Breite B des Schellenbügels 12 ist, und eine abgewickelte Länge L der Rückseite 23 auf, die gleich oder kleiner der Breite B des Schellenbügels 12 ist. Die Rückseite 23 ist im unmontierten Zustand der Einlage 21 konkav zu den Hintergreifabschnitten 24, wobei die Rückseite 23 dem Aufnahmeraum 22 der Einlage 21 zugewandte Abschrägungen 25 aufweist, die benachbart zum Übergangsbereich zwischen der Rückseite 23 und den Hintergreifabschnitten 24 angeordnet sind. Die Abschrägungen 25 sind durch Materialanhäufungen in diesen Übergangsbereichen ausgebildet.

Die Einlage 21 ist mit in Längserstreckung der Einlage 21 verlaufenden Hohlräumen 26 und 27 versehen, welche auch im montierten Zustand der Einlage 21 am Schellenbügel 12 eine ausreichende Weichheit und somit eine vorteilhafte Entkopplung der in der Rohrschelle fixierten Leitung gewährleisten. Weiter sind an der Rückseite 23 der Einlage 21 entlang der Längserstreckung der Einlage 21 verlaufende Vorsprünge 28 vorgesehen, die bei einer in der Rohrschelle 11 aufgenommen Leitung mit dem Schellenbügel 12 in Anlage kommen und damit zusätzlich ein elastisches Verhalten der Einlage 21 sowie in Kombination mit einem entsprechend ausgeformten Schellenbügel 12 auch eine vorteilhafte seitliche Fixierung der Einlage 21 im montierten Zustand gewährleisten.

Bei der Montage der Einlage 21 an dem Schellenbügel 12 wird die Einlage 21 gestreckt, wobei die Rückseite 23 gelängt wird und der Schellenbügel 12 mit seiner gesamten Breite B in dem Aufnahmeraum 22 aufnehmbar ist. Die Einlage 21 ist im montierten Zustand klemmend an dem Schellenbügel 12 gehalten. Dabei werden Klemmkräfte F und Momente M erzeugt, welche ein Festkrallen beziehungsweise Festhalten der Einlage 21 an dem Schellenbügel 12 bewirken.

## Patentansprüche

1. Rohrschelle mit zumindest einem Schellenbügel, der in einer Breite (B) zueinander beabstandete Seitenränder (16) aufweist, und
mit einer Einlage (21), die einen Aufnahmeraum (22) mit einer lichten Weite (A) für den zumindest einen Schellenbügel (12, 13) aufweist, wobei der Aufnahmeraum (22) von einer dem Schellenbügel (12, 13) zugewandten Rückseite (23) und von zwei beabstandet dazu angeordneten Hintergreifabschnitten (24) zum seitlichen Umgreifen der Seitenränder (16) des Schellenbügels (12, 13) zumindest bereichsweise begrenzt ist,
**dadurch gekennzeichnet, dass**
die Einlage (21) quer zu einer Erstreckungsrichtung des zumindest einen Schellenbügels (12, 13) vorgespannt an dem zumindest einen Schellenbügel (12, 13) gehalten ist.

2. Rohrschelle nach Anspruch 1, **dadurch gekennzeichnet, dass** die Einlage (21) im unmontierten Zustand eine lichte Weite (A) des Aufnahmeraums (22) aufweist, die kleiner als die Breite (B) des zumindest einen Schellenbügels (12, 13) ist, und eine abgewickelte Länge (L) der Rückseite (23) aufweist, die gleich oder kleiner der Breite (B) des Schellenbügels (12, 13) ist.

3. Rohrschelle nach Anspruch 1 oder 2, **dadurch gekennzeichnet, dass** die Rückseite (23) im unmontierten Zustand der Einlage (21) konkav zu den Hintergreifabschnitten (24) ist.

4. Rohrschelle nach einem der Ansprüche 1 bis 3, **dadurch gekennzeichnet, dass** die Rückseite (23) der Einlage (21) dem Aufnahmeraum (22) zugewandte Abschrägungen (25) aufweist, die benachbart zu einem Übergangsbereich zwischen der Rückseite (23) und den Hintergreifabschnitten (24) vorgesehen sind.
